# EUROPEAN PATENT SPECIFICATION

(11) **EP 1 810 544 B1**
(45) Date of publication and mention of the grant of the patent: **27.09.2017**
(21) Application number: 05803687.2
(22) Date of filing: 01.11.2005
(51) Int. Cl.: H04W 64/00

(54) **METHOD FOR POSITIONING MOBILE STATION, MOBILE POSITIONING SYSTEM, BASE STATION AND NETWORK ELEMENT**
VERFAHREN ZUR POSITIONIERUNG EINER MOBILSTATION, MOBILPOSITIONIERUNGSSYSTEM, BASISTATION UND NETZWERKELEMENT
PROCEDE DE POSITIONNEMENT DE STATION MOBILE, SYSTEME DE POSITIONNEMENT DE MOBILE, STATION DE BASE ET ELEMENT DE RESEAU A CET EFFET

(30) Priority: 02.11.2004 FI 20045414
(43) Date of publication of application: 25.07.2007
(73) Proprietor: EXFO Oy, 90590 Oulu (FI)
(72) Inventor: LOTVONEN, Jukka, FI-90440 Kempele (FI)
(74) Representative: Kolster Oy Ab
(86) International application number: PCT/FI2005/050385
(87) International publication number: WO 2006/048508

(56) References cited:
- WO-A1-00/54524
- WO-A1-96/02007
- WO-A1-03/071303
- DE-A1- 4 421 227
- GB-A- 2 398 445
- US-A- 6 081 723
- US-A1- 2002 005 804

## Description

### FIELD

The invention relates to a method for positioning a mobile station, to a mobile positioning system, a base station and a network element.

### BACKGROUND

There are various methods for positioning a mobile station. In data transmission systems the positions of terminal devices can be determined for example by measuring the signals transmitted by base stations. The positioning may be based on the physical structure of the data transmission network or on the coverage area of a cell in the network. In cellular data transmission systems positioning may be based on measuring from the coverage area of the cells signalling information detected by a mobile station. The positioning may be carried out using for example location-dependent parameters of the GSM system (Global System for Mobile Communications), such as serving cell identifiers (ID), Location Area Codes (LAC) and transmission timing parameters (Timing Advance, TA). To carry out the positioning, signal strengths of the serving cell and the neighbour cells are usually required. Further, the position of a mobile station that happens to be outside the coverage area of the data transmission network cannot be determined at all with the above methods.

One solution would be to integrate a GPS receiver into the terminal device. In GPS (Global Positioning System) the position of a mobile station is computed on the basis of signals obtained from satellites orbiting the earth. However, GPS positioning requires a GPS receiver or a mobile station provided with a GPS receiver. Moreover, to integrate a GPS receiver into a mobile station is expensive, complicated and the receiver consumes a considerable amount of power in the mobile station. Further, GPS is suitable neither for urban environments nor for indoor positioning.

Reliable positioning systems are needed particularly in emergency situations, when operating in difficult circumstances and in different rescue operations, for example to locate missing persons through their mobile stations. Positioning should also be possible for example in a situation where the user of a mobile station is not personally capable of using the device. It is also possible that a person in distress succeeds in making an emergency call but does not know his/her location, or the call is disconnected before the person is able to tell the location. A reliable positioning system is also needed when a person on a hiking tour, for example, is unable to call for help because he/she is in an area that is not covered by the public radio network.

GB 2398445 discloses a location system utilizing a cellular triangulation technique.

### BRIEF DESCRIPTION

It is an object of the invention to provide a method and a system implementing the method to obtain an improved method for positioning a mobile station, an improved positioning system and a base station.

This is achieved by a method for positioning a mobile station, the method comprising: determining an identifier of at least one mobile station to be positioned. The method of the invention further comprises: forming at least one positioning cell area by means of a mobile positioning system; receiving in the positioning system an identifier of one or more mobile stations on the basis of location updates made by the mobile stations in each location area of the formed positioning cell area; and positioning the mobile station when the positioning system receives the identifier of the mobile station to be positioned, wherein a location area code of the positioning cell is different than a location area code of neighbour cells, and the positioning cell has a higher transmission power level than the cellular coverage areas of the radio network.

The invention also relates to a mobile positioning system comprising at least one processing unit controlling the operations of the positioning system, the processing unit being arranged to determine at least one identifier of a mobile station to be positioned. The positioning system of the invention further comprises: at least one base station connected to the processing unit; and a network element controlling the operations of the base station; the base station being arranged to form at least one positioning cell area, to receive an identifier of one or more mobile stations on the basis of location updates made by the mobile stations in each location area of the formed positioning cell area, and the processing unit being arranged to position the mobile station to be positioned when the positioning system receives the identifier of the mobile station to be positioned, wherein a location area code of the positioning cell is different than a location area code of neighbour cells, and the positioning cell has a higher transmission power level than the cellular coverage areas of the radio network.

One aspect of the invention is a base station to be used in a positioning, the base station comprising: a processing unit for controlling the operations of the base station; at least one transceiver connected to the processing unit for communication purposes; and at least one antenna connected to the transceiver for sending and receiving radio waves. The base station of the invention is mobile, and the transceiver of the base station is controlled by the positioning unit and arranged to form at least one positioning cell area and to receive an identifier of one or more mobile stations on the basis of location updates made by the mobile stations in each location area of the formed positioning cell area to enable the mobile station to be positioned when the positioning system receives the identifier of the mobile station to be positioned, wherein a location area code of the positioning cell is different than a location area code of neighbour cells, and the positioning cell has a higher transmission power level than the cellular coverage areas of the radio network.

The method and system of the invention provide a number of advantages. For example, positioning accuracy is improved, no changes are required to existing mobile station equipment, and positioning is also possible indoors and in urban environment. In addition, positioning is possible when the mobile station is outside the coverage area of the public data transfer network.

### LIST OF FIGURES

In the following the invention is disclosed in greater detail with reference to preferred embodiments and the accompanying drawings, in which
Figure 1 illustrates a data transmission system and an example of a positioning system;
Figure 2 illustrates a base station of a mobile positioning system and a mobile station;
Figure 3 shows an arrangement of retrieving encryption keys in the registers of a mobile telephone network;
Figure 4 illustrates an example of cell coverage areas of a cellular radio network and a positioning cell area of a positioning system;
Figure 5 illustrates an example of positioning cell areas of a mobile positioning system; and
Figure 6 illustrates an example of a method for positioning a mobile station.

### DESCRIPTION OF EMBODIMENTS

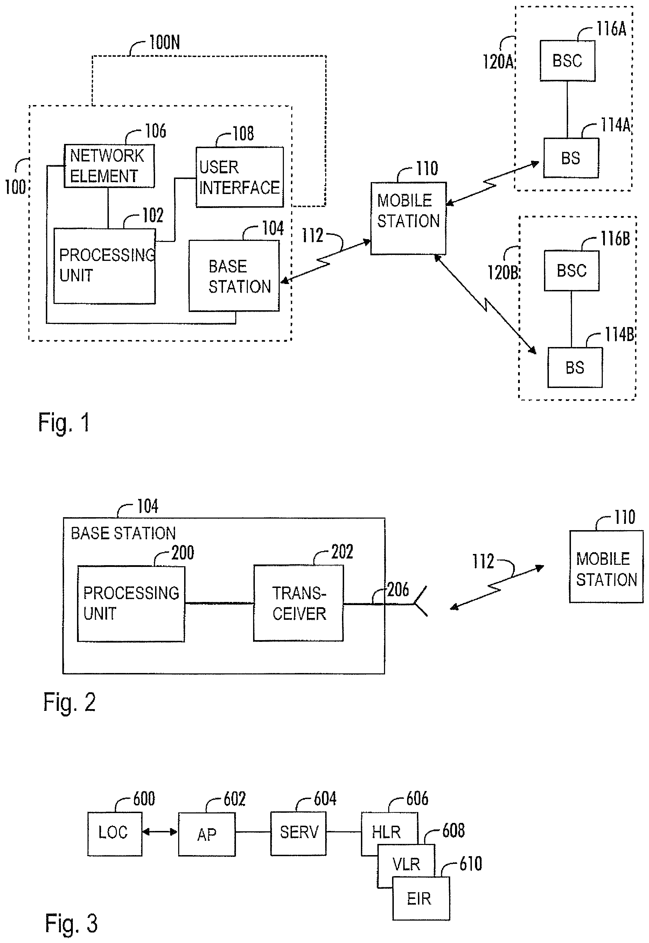

Figure 1 illustrates an example of a data transmission system in which the disclosed positioning solution can be applied. Figure 1 shows a mobile station 110, which may be for example a mobile phone provided with the usual functionalities, a PDA device provided with communications connections, or some other similar device capable of communicating with a data transmission network, for example. The mobile station 110 communicates for example within a data transmission network represented in Figure 1 by radio access networks 120A, 120B. The data transmission network may be based on GSM (Global System for Mobile Communications), WCDMA (Wideband Code Division Multiple Access) or CDMA (Code Division Multiple Access) technology, for example.

The radio access network RAN 120A, 120B comprises at least one base station controller BSC 116A, 116B. The base station controller 116A, 116B controls at least one base station 114A, 114B. The base station controller 116A, 116B may also be referred to as a radio network controller, and the base station 114A, 114B as a node B. When within the coverage area of the data transmission network, the mobile station 110 may communicate with one or more base stations 114A, 114B over GSM/GPRS/EDGE connections, for example.

The mobile positioning system 100 of Figure 1 comprises a processing unit 102 controlling the operations of the positioning system, at least one base station 104 connected to the processing unit 102, and a network element 106 controlling the operations of the base station. The base station 104 is connected to the processing unit 102 via the network element 106. The positioning system 100 may also comprise a user interface 108 enabling the operations of the positioning system 100 to be controlled and monitored. In addition, the user interface 108 may comprise a display and a keyboard. The user interface 108 may further comprise various user interface parts, such as a microphone and a loudspeaker. The positioning system may also comprise a satellite locator for determining the location of the positioning system. The positioning system 100 may also comprise a memory as well as various other elements. When necessary, all parts of the positioning system 100 may be integrated into a single positioning device. The mobile positioning system 100 may also comprise other portable positioning elements comprising at least the processing unit 102, base station 104 and network element 106, which are illustrated in Figure 1 by reference 100N.

The network element 106 of the positioning system 100 operates by emulating the operations of the mobile telephone network to the base station 104 over a base station controller interface. The network element may comprise a NetHawk BSC/Abis Simulator tool, for example, which in turn may also comprise protocol elements above the base station controller, such as an MSC (Mobile Services Switching Center), HLR (Home Location Register), GGSN (Gateway GPRS Support Node), SGSN (Serving GPRS Support Node), to enable communication at the A-bis interface without a connection to the actual mobile network.

The network element 106 may also contain a wireless connection to some network elements of the mobile network for retrieving the necessary authentication and encryption keys, for example. As shown in Figure 3 the mobile telephone network is provided with a server 604 that connects to network registers HLR 606, VLR 608, EIR MAP 610 over an interface. The positioning system 600 connects to an Internet service access point AP 602 via a wireless connection provided by GPRS, for example. The connection from the service access point to the server 604 is formed via the Internet. The server 604 provides the interface for the positioning system 600 to inquire encryption keys or other data in the registers. The server 604 retrieves the data from the register over the MAP interface.

The network element 106 may be connected to one or more base stations 104. The network element 106 also enables mobile phones, for example, to be linked to the positioning system 100, thus allowing the mobile phones to communicate through the base station 104.

The processing unit 102 is a block controlling the operation of the devices and today it is usually implemented as a processor provided with the associated software, although different hardware configurations are also possible, such as circuits consisting of separate logic components or one or more Application-Specific Integrated Circuits (ASIC). Also a hybrid of these implementations is possible. The positioning system 100 may comprise a personal computer carrying for example a Windows® or some other user interface and equipped with a network element 106 linking the system to the base station 104. The network element 106 comprises an interface card, for example, that can be implemented into an extension card conforming to the PCI (Peripheral Component Interconnect) standard, for example. The interface card is used for connecting data traffic to the positioning system 100 over an E1 (European Digital Signal 1) / T1 (digital T-carrier system) link providing the base station with a base station controller interface. The structure and operation of the interface card is disclosed in greater detail in the earlier applications FI 20045134 (published on 16 October 2005) and FI 20040397 (published on 16 September 2005) of the Applicant. The base station may provide the base station controller interface also via an IP network, in which case it may connect to the network element through the IP interface of a personal computer.

The processing unit 102 in the mobile positioning system 100 is responsible for data processing. According to an embodiment the processing unit 102 is configured to determine an identifying identifier of the mobile station to be positioned. Examples of this kind of an identifier include IMSI (International Mobile Subscriber Identity) and IMEI (International Mobile Station Equipment Identity) of the mobile station 110. IMSI is a unique subscriber identifier containing an NMSI (National Mobile Subscriber Identity) and an MCC (Mobile Country Code). IMEI in turn is an identifier that enables the mobile station to be uniquely identified as a part of a specific device or system. For example, when the identity of a missing person is known, also the identifier of a mobile station carried by the person is easy to find out. If the mobile positioning system 100 is controlled by rescue authorities, for example, it may be allowed to retrieve identifiers from mobile network servers, for example. An identifier of a mobile station 110 to be positioned may also be entered manually into the positioning system 100 through the user interface.

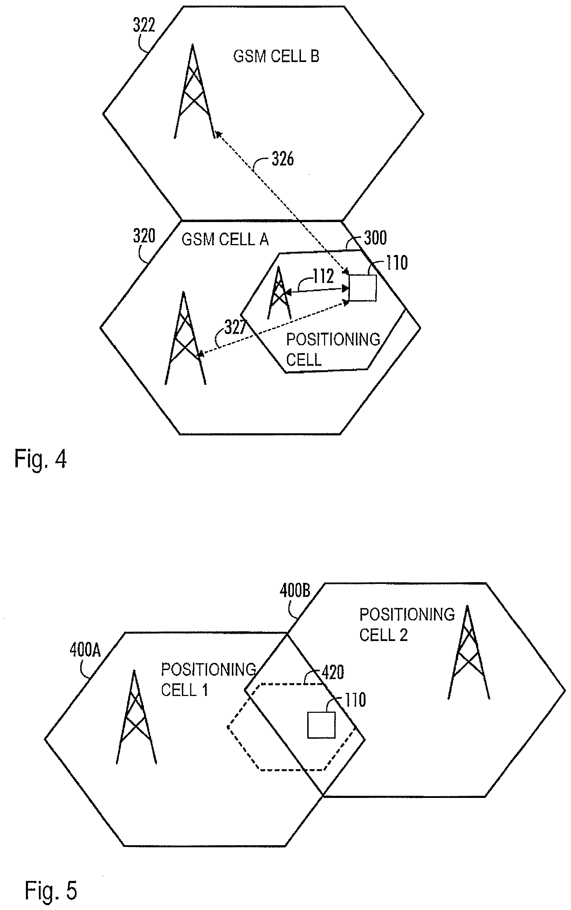

Figure 4 shows an example of the cellular coverage areas of a cellular radio network and a positioning system. The mobile station 110 to be positioned may be within a GSM cellular coverage area, for example. In the example of Figure 4 the mobile station 110 is located in cellular coverage area A 320 of the cellular radio network, the coverage area serving the mobile station 110 and being located in a first location area. A cellular coverage area B 322 is located in a second location area. The mobile station 110 also measures signals 326, 327 transmitted by the base stations in neighbouring cells, for example signals from neighbouring cell B 322. The mobile stations 110 of the cellular radio network may perform location updates for example when the power of another signal 326, 327 measured by the mobile station exceeds the power of the signal 327, 326 of the current location area.

According to an embodiment the base station 104 of the mobile positioning system 100 is arranged to form at least one positioning cell area 300. In the example of Figure 4 the mobile positioning system 100 thus forms a new positioning cell area 300 within the cellular coverage area A 320 of the radio network where the mobile station 110 is located.

According to an embodiment the moving base station 104 receives identifiers of one or more mobile stations 110 in each location area of the formed positioning cell area 300 on the basis of location updates made by the mobile stations. The mobile positioning system 100 sets the parameters valid in the positioning cell area 300 such that mobile stations in the positioning cell area 300 perform their location updates to the base station 104 of the positioning system 100. In other words, the base station 104 of the positioning system 100 is included in the list of neighbour cells of the mobile stations, the power of the base station 104 exceeding that of the other cells. The mobile network code (MNC) and the mobile country code (MCC) used by the positioning cell area 300 are the same as those of the radio network and its location area code (LAC) is different than the location area code of the neighbour cells, but to ensure that the mobile stations perform their location updates to the base station 104 of the positioning system 100 and not to the base stations of the radio network, it has a higher transmission power level than the cellular coverage areas of the radio network.

Mobile stations within the positioning cell area 300 may perform location updates to the base station 104 by using a TMSI identifier (temporary mobile subscriber identity). The base station 104 asks the mobile station to send its identifier, such as the IMSI or IMEI. When the identifier of the mobile station 110 is received, the base station 104 is arranged to maintain a radio connection 112 or to set up a new radio connection 112 to the mobile station 110 to be positioned. The processing unit 102 is arranged to locate then the mobile station 110 to be positioned on the basis of the radio connection 112. The radio connection to the mobile station 110 may be set up only for a little while at a time to save power. The neighbour cell settings of the positioning system may be modified for example to allow a plural number of positioning devices to be used or to remove cells disturbing the measurement of the mobile network from the list of neighbour cells of the mobile station.

According to an embodiment a directional antenna 206 is used to find the direction of the best radio field, the strength of a radio field being read from measurement reports sent by the mobile station 110. For example, the base station 104 is arranged to adjust the transmission direction of the antenna 206 on the basis of signals received from the mobile station 110 to be positioned. The antenna 206 may be for example a small, portable directional antenna, such as a Yagi, whose direction a rescue team member, for example, may adjust manually on the basis of the strength of the received signal.

According to an embodiment the mobile positioning system is portable, the base station thus being a small pico base station and the processing unit and the network element being arranged to operate in the portable device. In that case a small directional antenna is used, and the equipment is provided with batteries. The batteries may be replaceable during operation.

According to another embodiment the positioning system 100 may prevent location updates from mobile stations whose identifier is not the same as the identifier of the mobile station 110 to be positioned. This may be implemented by sending a location update rejection together with a suitable reason code from the positioning system 100 so that subsequent mobile stations do not try to perform location update to the base station 104 of the positioning system 100.

Since the positioning system 100 is mobile the mobile station may be positioned by moving the positioning system 100 towards the mobile station 110 to be positioned. By moving the positioning system 100 it is also possible to triangulate, for example, the location of the mobile station 110. The positioning is carried out using for example the values measured by the positioning system 100 in its different locations as the location of the positioning system changes towards the mobile station to be positioned. It is also possible to position the mobile station by using values measured from known neighbour cells.

Figure 2 shows a base station 104 of a portable positioning system and a mobile station 110. The base station 104 is a small portable pico base station comprising at least one processing unit 200 for controlling the operations of the base station, at least one transceiver 202 connected to the processing unit for communications purposes, and at least one antenna 206 connected to the transceiver 202 for transmitting and receiving radio waves.

According to an embodiment the transceiver 202 of the base station is controlled by the processing unit 200 and arranged to form a mobile positioning cell area, and to receive an identifier of one or more mobile stations on the basis of location updates performed by the mobile stations in each location area of the formed positioning cell area. The processing unit 200 of the base station 104 is also arranged to maintain a radio connection 112 or to set up a new radio connection to the mobile station 110 to be positioned when an identifier of the mobile station to be positioned is received to enable the mobile station 110 to be positioned on the basis of the radio connection.

According to an embodiment the distance between the base station 104 and the mobile station 110 can be deduced on the basis of the transmission power of the base station 104 and the reception level (RX level) measured by the mobile station. The accuracy of positioning may be further increased by also taking into account the timing advance (TA) of the transmission and/or the transmission power level and/or the location of radio network cells around the mobile station 110 and their transmission power levels. If the mobile station 110 to be positioned is operating in the GSM network, the method can be applied without any changes to the network; the only thing to do is to find a weak neighbour cell of the mobile station 110 to be positioned, the channel of that cell being then used in the positioning system. The positioning system may comprise an engineering phone used for measurement purposes and allowing power levels of neighbour cells to be measured in the mobile network. It is also possible to add the channel used by the positioning device into the list of neighbour cells of the mobile network.

According to an embodiment it is also possible to use the positioning system to influence the base station settings in the data transfer network. This alternative may be used for example when the positioning system is near an efficient data transfer network cell, in which case the transmission power of the network can be momentarily decreased to find the mobile station to be positioned.

Figure 5 illustrates an example of positioning cell areas 400A, 400B, 420 of a mobile positioning system. In this example the portable mobile station 110 is not within the coverage area of any public radio network. The user of the device may have got into an area where connection to the public radio network cannot be set up. In this situation a mobile positioning system could be used by a rescue team, for example, alarmed to find the user of the mobile station 110 reported missing.

The positioning of the mobile station 110 may begin for example in an area where the missing person is known to have been last. It is possible that location data is received through the radio network to establish where the mobile station 110 was last in contact with the radio network, and the search may then start in this area.

It is possible to position the mobile station 110 as above by using the base station of the positioning system to form one mobile positioning cell area 400A, by receiving an identifier of one or more mobile stations 110 on the basis of location updates performed by mobile stations in each location of the formed positioning cell area 400A, by maintaining a radio connection or by setting up a new radio connection to the mobile station to be positioned when the positioning system receives an identifier of the mobile station to be positioned, and by positioning the mobile station on the basis of the radio connection. When necessary, it is also possible to set up a voice contact or to send a short message or some other information to the mobile station by means of the positioning system.

According to an embodiment it is also possible to use two or more positioning elements comprising a processing unit, base station and network element of the positioning system and to form a plural number of positioning cell areas 400A, 400B. Figure 5 shows an example of two positioning cell areas 400A, 400B. When a plural number of positioning elements are used, one may form a fixed, stationary positioning cell, for example, and another positioning element may form a mobile positioning cell. It is also possible that both the positioning cells are mobile. In practice one positioning element may move within a particular area, in a car for example, a second one in a helicopter, and a third one may be carried by a rescue team member. Using a plural number of positioning elements is advantageous particularly when the person carrying the mobile station 110 to be positioned is moving.

It is thus possible to enhance positioning by using a plural number of positioning cell areas 400A, 400B, as shown in Figure 5. One of the two positioning cell areas 400B of Figure 5 may be determined as a neighbour cell of the first positioning cell 400A. Next, a direction from the second positioning cell area 400B to the mobile station 110 to be positioned may be determined on the basis of measurement reports relating to the neighbour cell 400B of the mobile station. When a plural number of positioning elements are used, they can be synchronized and made to communicate with each other. The measurement results may be transferred on a connection between the positioning elements. A rescue team member, for example, may thus manually adjust the directional antenna of the second positioning cell area on the basis of measurement reports relating to the neighbour cell 400B.

According to an embodiment it is possible to change the size of the positioning cell area 400A dynamically on the basis of the distance between the base station of the positioning cell area 400A and the mobile station 110 to be positioned by adjusting the transmission power of the base station. In the example of Figure 5 the size of the positioning cell area 400A has been reduced because the distance between the base station and the mobile station has shortened. The reduced positioning cell area is represented in Figure 5 by a positioning cell area 420. The size of the positioning cell area 400A, 400B may be changed on the basis of signals received from the mobile station 110 to be positioned.

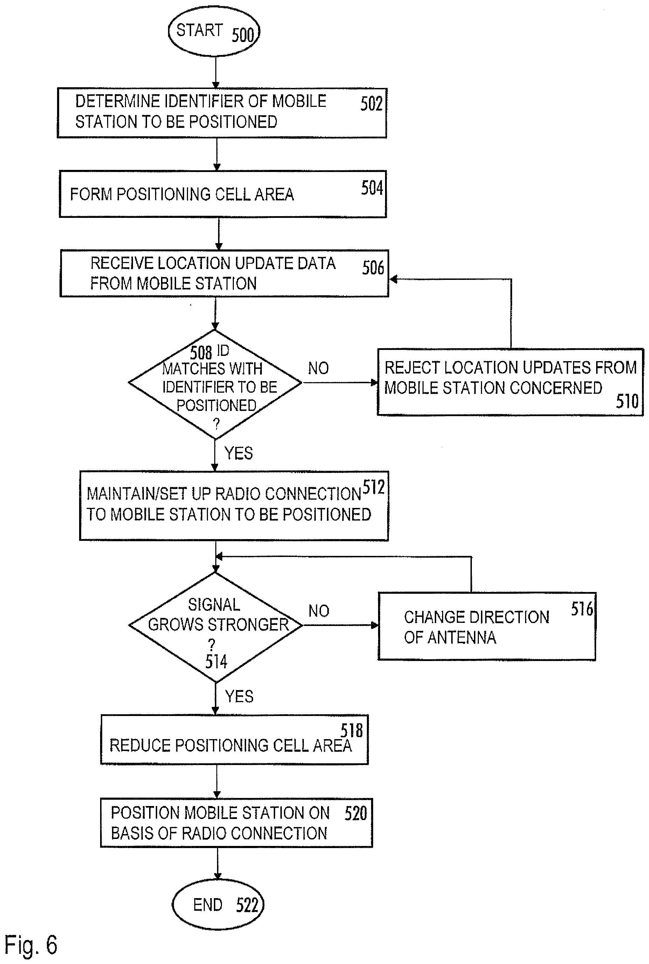

Figure 6 illustrates an example of a method for positioning a mobile station. The method starts at 500. At 502 an identifier of the mobile station is determined, and at 504 a positioning cell area is formed. The size of the positioning cell area is determined on the basis of the assumed location of the mobile station to be positioned and on the basis of the power level of other cells in the network. At 506 location update data are received from a mobile station located in the cell coverage area. At 508 the routine checks whether the location update data contain the identifier of the mobile station to be positioned. If not, the routine proceeds to 510 where subsequent location updates from the mobile station to the positioning cell area are blocked. From 510 the routine returns to 506 where location update data of another mobile station are received. If it is detected at 508 that the location update data now received contains the identifier of the mobile station to be positioned, the routine proceeds to 512.

At 512 a radio connection is maintained or a new radio connection is set up to the mobile station to be positioned. The location of the mobile station may be determined on the basis of the radio connection. In the example of Figure 6 the routine then monitors whether the signal received from the mobile station is growing stronger and/or whether the distance between the mobile station and the positioning system decreases when the portable positioning system is moved to a particular direction. If this is not the case, the routing proceeds to 516 where the direction of the antenna of the positioning system may be changed, for example. From 516 the routine returns to 514. At 518 the positioning cell area or the power of the positioning system may be reduced if it is detected that the signals received from the mobile station is growing stronger or the distance between the mobile station and the positioning system is becoming shorter. At 520 the mobile station is positioned on the basis of the radio connection. The positioning may be carried out using for example triangulation in two different ways: by changing the location of the mobile positioning system or by using values measured from known neighbour cells in the radio network. Another way to carry out the positioning is to move towards the mobile station to be positioned. The method ends at 522.

Although the invention has been disclosed above with reference to an example based on the accompanying drawings, it is obvious that the invention is not restricted thereto but may vary in many ways within the scope of the accompanying claims.

## Claims

1. A method for positioning a mobile station, the method comprising: determining (502) an identifier of at least one mobile station to be positioned, **characterized by** the method further comprising:
forming (504) at least one positioning cell area by means of a mobile positioning system;
receiving (506) in the positioning system an identifier of one or more mobile stations on the basis of location updates made by the mobile stations in each location area of the formed positioning cell area; and
positioning (520) the mobile station when the positioning system receives the identifier of the mobile station to be positioned,
wherein a location area code of the positioning cell is different than a location area code of neighbour cells, and the positioning cell has a higher transmission power level than the cellular coverage areas of the radio network.

2. A method according to claim 1, **characterized by** comprising: maintaining a radio connection or setting up (512) a new radio connection to the mobile station to be positioned when the positioning system has received the identifier of the mobile station to be positioned; and positioning (520) the mobile station on the basis of the radio connection.

3. A method according to claim 1, **characterized by** comprising: changing (516, 518) the size of the positioning cell area dynamically on the basis of the distance between the mobile positioning system and the mobile station to be positioned.

4. A method according to claim 1, **characterized by** comprising: changing (516, 518) the size of the positioning cell area on the basis of signals received from the mobile station to be positioned.

5. A method according to claim 1, **characterized by** comprising: moving the positioning cell area towards the mobile station to be positioned on the basis of the radio connection and reducing the size of the positioning cell area when approaching the mobile station to be positioned.

6. A method according to claim 1, **characterized by** comprising: rejecting (510) location updates from mobile stations whose identifier is different from the identifier of the mobile station to be positioned.

7. A method according to claim 1, **characterized by** comprising: using a directional antenna to form a positioning cell area.

8. A method according to claim 1, **characterized by** comprising: measuring the distance between the mobile station to be positioned and the mobile positioning system on the basis of the ratio between a timing advance (TA) and/or the transmission power of the positioning system and the strength of the reception level (RX level) measured by the mobile station.

9. A method according to claim 1, **characterized by** comprising: positioning the mobile station by triangulation.

10. A method according to claim 1, **characterized by** comprising: positioning the mobile station to be positioned by using values measured by the mobile positioning system in different locations thereof when the location of the positioning system changes towards the mobile station to be positioned.

11. A method according to claim 1, **characterized by** comprising: using two positioning cell areas for positioning the mobile station to be positioned.

12. A mobile positioning system comprising at least one processing unit (102) controlling the operations of the positioning system, the processing unit being arranged to determine at least one identifier of a mobile station (110) to be positioned, **characterized in that** the positioning system further comprises:
at least one base station (104) connected to the processing unit; and
a network element (106) controlling the operations of the base station;
the base station (104) being arranged to form at least one positioning cell area, to receive an identifier of one or more mobile stations on the basis of location updates made by the mobile stations in each location area of the formed positioning cell area, and the processing unit (102) being arranged to position the mobile station to be positioned when the positioning system receives the identifier of the mobile station to be positioned,
wherein a location area code of the positioning cell is different than a location area code of neighbour cells, and the positioning cell has a higher transmission power level than the cellular coverage areas of the radio network.

13. A positioning system according to claim 12, **characterized in that** when the identifier of the mobile station to be positioned is received, the base station (104) is further arranged to maintain a radio connection or to set up a new radio connection to the mobile station to be positioned, and the processing unit (102) is arranged to position the mobile station to be positioned on the basis of the radio connection.

14. A positioning system according to claim 12, **characterized in that** the processing unit (102) is arranged to change the size of the positioning cell area dynamically on the basis of the distance between the positioning system and the mobile station to be positioned.

15. A positioning system according to claim 12, **characterized in that** the processing unit (102) is arranged to change the size of the positioning cell area on the basis of signals received from the mobile station to be positioned.

16. A positioning system according to claim 12, **characterized in that** the processing unit (102) is arranged to control the mobile positioning system towards the mobile station to be positioned on the basis of the radio connection and to reduce the size of the positioning cell area when the mobile station to be positioned is being approached.

17. A positioning system according to claim 12, **characterized in that** the processing unit (102) is arranged to reject location updates from mobile stations whose identifier is different from the identifier of the mobile station to be positioned.

18. A positioning system according to claim 12, **characterized in that** the processing unit (102) is arranged to measure the distance of the mobile station on the basis of the ratio between a timing advance (TA) and/or the transmission power of the positioning system and the strength of the reception level (RX level) measured by the mobile station.

19. A positioning system according to claim 12, **characterized in that** the processing unit (102) is arranged to position the mobile station by triangulation.

20. A base station to be used in a positioning system according to claim 12, the base station (104) comprising:
a processing unit (200) for controlling the operations of the base station;
at least one transceiver (202) connected to the processing unit for communication purposes; and
at least one antenna (206) connected to the transceiver for sending and receiving radio waves,
**characterized in that** the base station is mobile and that
the transceiver (202) of the base station is controlled by the positioning unit and arranged to form at least one positioning cell area and to receive an identifier of one or more mobile stations on the basis of location updates made by mobile stations in each location area of the formed positioning cell area to enable the mobile station to be positioned when the positioning system receives the identifier of the mobile station to be positioned,
wherein a location area code of the positioning cell is different than a location area code of neighbour cells, and the positioning cell has a higher transmission power level than the cellular coverage areas of the radio network.

21. A base station according to claim 20, **characterized in that** the processing unit (200) is arranged to maintain a radio connection or to set up a new radio connection to the mobile station to be positioned when the identifier of the mobile station to be positioned is received to enable the positioning of the mobile station to be positioned on the basis of the radio connection.

## Patentansprüche

1. Verfahren zur Positionsbestimmung einer Mobilfunkstation, wobei das Verfahren aufweist:
Bestimmen einer Kennung (502) mindestens einer zu ortenden Mobilfunkstation,
**dadurch gekennzeichnet, dass** das Verfahren ferner aufweist:
Bilden (504) mindestens eines Positionsbestimmungszellenbereichs mittels eines Mobilfunkpositionsbestimmungssystems;
in dem Positionsbestimmungssystem, Empfangen (506) einer Kennung einer oder mehrerer Mobilfunkstationen auf der Basis von Positionsaktualisierungen, welche von den Mobilfunkstationen in jedem Positionsbereich des gebildeten Positionsbestimmungsbereichs durchgeführt wird; und
Bestimmen der Position (520) der Mobilfunkstation, wenn das Positionsbestimmungssystem die Kennung der zu ortenden Mobilfunkstation empfängt,
wobei ein Positionsbereichscode der Positionsbestimmungszelle von einem Positionsbereichscode benachbarter Zellen verschieden ist, und die Positionsbestimmungszelle einen höheren Sendeleistungslevel aufweist als die Mobilfunkabdeckungsbereiche des Funknetzwerks.

2. Verfahren nach Anspruch 1, **dadurch gekennzeichnet, dass** es aufweist: Aufrechterhalten einer Funkverbindung oder Herstellen (512) einer neuen Funkverbindung mit der zu ortenden Mobilfunkstation, wenn das Positionsbestimmungssystem die Kennung der zu ortenden Mobilfunkstation empfangen hat; und Bestimmen der Position (520) der Mobilfunkstation auf der Basis der Funkverbindung.

3. Verfahren nach Anspruch 1, **dadurch gekennzeichnet, dass** es aufweist: dynamisches Ändern (516, 518) der Größe des Positionsbestimmungszellenbereichs auf der Basis der Entfernung zwischen dem Mobilfunkpositionsbestimmungssystem und der zu ortenden Mobilfunkstation.

4. Verfahren nach Anspruch 1, **dadurch gekennzeichnet, dass** es aufweist: Ändern (516, 518) der Größe des Positionsbestimmungszellenbereichs auf der Basis von Signalen, welche von der zu ortenden Mobilfunkstation her empfangen werden.

5. Verfahren nach Anspruch 1, **dadurch gekennzeichnet, dass** es aufweist: Bewegen des Positionsbestimmungszellenbereichs in Richtung der zu ortenden Mobilfunkstation auf der Basis der Funkverbindung, und Verringern der Größe des Positionsbestimmungszellenbereichs bei Annäherung an die zu ortende Mobilfunkstation.

6. Verfahren nach Anspruch 1, **dadurch gekennzeichnet, dass** es aufweist: Zurückweisen (510) von Positionsaktualisierungen von Mobilfunkstationen, deren Kennung von der Kennung der zu ortenden Mobilfunkstation verschieden ist.

7. Verfahren nach Anspruch 1, **dadurch gekennzeichnet, dass** es aufweist: Verwenden einer Richtantenne zur Bildung eines Positionsbestimmungszellenbereichs.

8. Verfahren nach Anspruch 1, **dadurch gekennzeichnet, dass** es aufweist: Messen der Entfernung zwischen der zu ortenden Mobilfunkstation und dem Mobiltelefonpositionsbestimmungssystem auf der Basis des Verhältnisses zwischen einem Timing Advance (TA) und/oder der Sendeleistung des Positionsbestimmungssystems und der von der Mobilfunkstation gemessenen Stärke des Empfangslevels (RX-Level).

9. Verfahren nach Anspruch 1, **dadurch gekennzeichnet, dass** es aufweist: Bestimmen der Position der Mobilfunkstation durch Triangulation.

10. Verfahren nach Anspruch 1, **dadurch gekennzeichnet, dass** es aufweist: Bestimmen der Position der zu ortenden Mobilfunkstation unter Verwendung von Werten, die von dem Mobilfunkpositionsbestimmungssystem an unterschiedlichen Positionen desselben gemessen werden, wenn sich die Position des Positionsbestimmungssystems in Richtung der zu ortenden Mobilfunkstation ändert.

11. Verfahren nach Anspruch 1, **dadurch gekennzeichnet, dass** es aufweist: Verwenden zweier Positionsbestimmungszellenbereiche zur Positionsbestimmung der zu ortenden Mobilfunkstation.

12. Mobilfunkpositionsbestimmungssystem mit mindestens einer Verarbeitungseinheit (102), welche die Operationen des Positionsbestimmungssystems steuert, wobei die Positionsbestimmungseinheit derart ausgebildet ist, dass sie mindestens eine Kennung einer zu ortenden Mobilfunkstation (110) bestimmt, **dadurch gekennzeichnet, dass** das Positionsbestimmungssystem ferner aufweist:
mindestens eine mit der Verarbeitungseinheit verbundene Basisstation (104); und
ein Netzwerkelement (106), das die Operationen der Basisstation steuert;
wobei die Basisstation (104) dazu ausgebildet ist, mindestens einen Positionsbestimmungszellenbereich zu bilden, eine Kennung einer oder mehrerer Mobilfunkstationen auf der Basis von Positionsaktualisierungen zu empfangen, welche von den Mobilfunkstationen in jedem Positionsbereich des gebildeten Positionsbestimmungszellenbereichs durchgeführt werden, und wobei die Verarbeitungseinheit (102) derart ausgebildet ist, dass sie die zu ortende Mobilfunkstation ortet, wenn das Positionsbestimmungssystem die Kennung der zu ortenden Mobilfunkstation empfängt,
wobei ein Positionsbereichscode der Positionsbestimmungszelle von einem Positionsbereichscode benachbarter Zellen verschieden ist, und wobei die Positionsbestimmungszelle einen höheren Sendeleistungslevel aufweist als die Mobilfunkabdeckungsbereiche des Funknetzwerks.

13. Positionsbestimmungssystem nach Anspruch 12, **dadurch gekennzeichnet, dass**, wenn die Kennung der zu ortenden Mobilfunkstation empfangen wird, die Basisstation (104) ferner dazu ausgebildet ist, eine Funkverbindung mit der zu ortenden Mobilfunkstation aufrechtzuerhalten oder eine neue Funkverbindung mit dieser herzustellen, und dass die Verarbeitungseinheit (102) dazu ausgebildet ist, die zu ortende Mobilfunkstation auf der Basis der Funkverbindung zu orten.

14. Positionsbestimmungssystem nach Anspruch 12, **dadurch gekennzeichnet, dass** die Verarbeitungseinheit (102) dazu ausgebildet ist, die Größe des Positionsbestimmungszellenbereichs auf der Basis der Entfernung zwischen dem Positionsbestimmungssystem und der zu ortenden Mobilfunkstation dynamisch zu ändern.

15. Positionsbestimmungssystem nach Anspruch 12, **dadurch gekennzeichnet, dass** die Verarbeitungseinheit (102) dazu ausgebildet ist, die Größe des Positionsbestimmungszellenbereichs auf der Basis von Signalen, welche von der zu ortenden Mobilfunkstation her empfangen werden, zu ändern.

16. Positionsbestimmungssystem nach Anspruch 12, **dadurch gekennzeichnet, dass** die Verarbeitungseinheit (102) dazu ausgebildet ist, das Mobilfunkpositionsbestimmungssystem auf der Basis der Funkverbindung in Richtung der zu ortenden Mobilfunkstation zu steuern und die Größe des Positionsbestimmungszellenbereichs bei einer Annäherung an die zu ortende Mobilfunkstation zu verringern.

17. Positionsbestimmungssystem nach Anspruch 12, **dadurch gekennzeichnet, dass** Verarbeitungseinheit (102) derart ausgebildet ist, dass sie Positionsaktualisierungen von Mobilfunkstationen zurückweist, deren Kennung von der Kennung der zu ortenden Mobilfunkstation verschieden ist.

18. Positionsbestimmungssystem nach Anspruch 12, **dadurch gekennzeichnet, dass** die Verarbeitungseinheit (102) dazu ausgebildet ist, die Entfernung zwischen der zu ortenden Mobilfunkstation und dem Mobiltelefonpositionsbestimmungssystem auf der Basis des Verhältnisses zwischen einem Timing Advance (TA) und/oder der Sendeleistung des Positionsbestimmungssystems und der von der Mobilfunkstation gemessenen Stärke des Empfangslevels (RX-Level) zu messen.

19. Positionsbestimmungssystem nach Anspruch 12, **dadurch gekennzeichnet, dass** die Verarbeitungseinheit (102) dazu ausgebildet ist, die Mobilfunkstation durch Triangulation zu orten.

20. Basisstation zur Verwendung in einem Positionsbestimmungssystem nach Anspruch 12, wobei die Basisstation (104) aufweist:
eine Verarbeitungseinheit (200) zum Steuern der Operationen der Basisstation;
mindestens einen Sendeempfänger (202), der mit der Verarbeitungseinheit zu Kommunikationszwecken verbunden ist; und
mindestens eine Antenne (206), die mit dem Sendeempfänger zum Senden und Empfangen von Funkwellen verbunden ist,
**dadurch gekennzeichnet, dass** die Basisstation mobil ist, und dass
der Sendeempfänger (202) der Basisstation von der Positionsbestimmungseinheit gesteuert ist und derart ausgebildet ist, dass er mindestens einen Positionsbestimmungszellenbereich bildet und eine Kennung einer oder mehrerer Mobilfunkstationen auf der Basis von Positionsaktualisierungen, die Mobilfunkstationen in jedem Positionsbereich des gebildeten Positionsbestimmungszellenbereichs durchführen, empfängt, um ein Bestimmen der Position der Mobilfunkstation zu ermöglichen, wenn das Positionsbestimmungssystem die Kennung der zu ortenden Mobilfunkstation empfängt,
wobei ein Positionsbereichscode der Positionsbestimmungszelle von einem Positionsbereichscode benachbarter Zellen verschieden ist, und wobei die Positionsbestimmungszelle einen höheren Sendeleistungslevel hat als die Mobilfunkabdeckungsbereiche des Funknetzwerks.

21. Basisstation nach Anspruch 20, **dadurch gekennzeichnet, dass** die Verarbeitungseinheit (200) dazu ausgebildet ist, eine Funkverbindung mit der zu ortenden Mobilfunkstation aufrechtzuerhalten oder eine neue Funkverbindung mit dieser herzustellen, wenn die Kennung der zu ortenden Mobilfunkstation empfangen wird, um die Bestimmung der Position der zu ortenden Mobilfunkstation auf der Basis der Funkverbindung zu ermöglichen.

## Revendications

1. Procédé de positionnement d'une station mobile, le procédé comprenant l'étape ci-après consistant à :
déterminer (502) un identifiant d'au moins une station mobile devant être positionnée, **caractérisé en ce que** le procédé comporte en outre les étapes ci-dessous consistant à :
former (504) au moins une zone de cellule de positionnement au moyen d'un système de positionnement mobile ;
recevoir (506), dans le système de positionnement, un identifiant d'une ou plusieurs stations mobiles sur la base de mises à jour de localisation réalisées par les stations mobiles dans chaque zone de localisation de la zone de cellule de positionnement formée ; et
positionner (520) la station mobile lorsque le système de positionnement reçoit l'identifiant de la station mobile devant être positionnée ;
dans lequel un code de zone de localisation de la cellule de positionnement est différent d'un code de zone de localisation de cellules voisines, et la cellule de positionnement présente un niveau de puissance de transmission supérieur à celui des zones de couverture cellulaire du réseau radio.

2. Procédé selon la revendication 1, **caractérisé en ce qu'**il comporte les étapes ci-après consistant à : maintenir une connexion radio ou établir (512) une nouvelle connexion radio à la station mobile devant être positionnée lorsque le système de positionnement a reçu l'identifiant de la station mobile devant être positionnée ; et positionner (520) la station mobile sur la base de la connexion radio.

3. Procédé selon la revendication 1, **caractérisé en ce qu'**il comporte l'étape ci-après consistant à : modifier (516, 518) la taille de la zone de cellule de positionnement, dynamiquement, sur la base de la distance entre le système de positionnement mobile et la station mobile devant être positionnée.

4. Procédé selon la revendication 1, **caractérisé en ce qu'**il comporte l'étape ci-après consistant à : modifier (516, 518) la taille de la zone de cellule de positionnement sur la base de signaux reçus en provenance de la station mobile devant être positionnée.

5. Procédé selon la revendication 1, **caractérisé en ce qu'**il comporte les étapes ci-après consistant à : déplacer la zone de cellule de positionnement vers la station mobile devant être positionnée sur la base de la connexion radio, et réduire la taille de la zone de cellule de positionnement à l'approche de la station mobile devant être positionnée.

6. Procédé selon la revendication 1, **caractérisé en ce qu'**il comporte l'étape ci-après consistant à : rejeter (510) des mises à jour de localisation en provenance de stations mobiles dont l'identifiant est différent de l'identifiant de la station mobile devant être positionnée.

7. Procédé selon la revendication 1, **caractérisé en ce qu'**il comporte l'étape ci-après consistant à : utiliser une antenne directionnelle en vue de former une zone de cellule de positionnement.

8. Procédé selon la revendication 1, **caractérisé en ce qu'**il comporte l'étape ci-après consistant à : mesurer la distance entre la station mobile devant être positionnée et le système de positionnement mobile sur la base du rapport entre une avance de temporisation (TA), et/ou la puissance de transmission du système de positionnement, et l'intensité du niveau de réception (niveau RX) mesuré par la station mobile.

9. Procédé selon la revendication 1, **caractérisé en ce qu'**il comporte l'étape ci-après consistant à : positionner la station mobile par triangulation.

10. Procédé selon la revendication 1, **caractérisé en ce qu'**il comporte l'étape ci-après consistant à : positionner la station mobile devant être positionnée, en utilisant des valeurs mesurées par le système de positionnement mobile à différents emplacements connexes lorsque l'emplacement du système de positionnement change vers la station mobile devant être positionnée.

11. Procédé selon la revendication 1, **caractérisé en ce qu'**il comporte l'étape ci-après consistant à : utiliser deux zones de cellules de positionnement en vue de positionner la station mobile devant être positionnée.

12. Système de positionnement mobile comprenant au moins une unité de traitement (102) commandant les opérations du système de positionnement, l'unité de traitement étant agencée de manière à déterminer au moins un identifiant d'une station mobile (110) devant être positionnée, **caractérisé en ce que** le système de positionnement comporte en outre :
au moins une station de base (104) connectée à l'unité de traitement ; et
un élément de réseau (106) commandant les opérations de la station de base ;
la station de base (104) étant agencée de manière à former au moins une zone de cellule de positionnement, et à recevoir un identifiant d'une ou plusieurs stations mobiles sur la base de mises à jour de localisation réalisées par les stations mobiles dans chaque zone de localisation de la zone de cellule de positionnement formée, et l'unité de traitement (102) étant agencée de manière à positionner la station mobile devant être positionnée lorsque le système de positionnement reçoit l'identifiant de la station mobile devant être positionnée ;
dans lequel un code de zone de localisation de la cellule de positionnement est différent d'un code de zone de localisation de cellules voisines, et la cellule de positionnement présente un niveau de puissance de transmission supérieur à celui des zones de couverture cellulaire du réseau radio.

13. Système de positionnement selon la revendication 12, **caractérisé en ce que,** lorsque l'identifiant de la station mobile devant être positionnée est reçu, la station de base (104) est en outre agencée de manière à maintenir une connexion radio ou à établir une nouvelle connexion radio à la station mobile devant être positionnée, et l'unité de traitement (102) est agencée de manière à positionner la station mobile devant être positionnée sur la base de la connexion radio.

14. Système de positionnement selon la revendication 12, **caractérisé en ce que** l'unité de traitement (102) est agencée de manière à modifier la taille de la zone de cellule de positionnement, dynamiquement, sur la base de la distance entre le système de positionnement et la station mobile devant être positionnée.

15. Système de positionnement selon la revendication 12, **caractérisé en ce que** l'unité de traitement (102) est agencée de manière à modifier la taille de la zone de cellule de positionnement sur la base de signaux reçus en provenance de la station mobile devant être positionnée.

16. Système de positionnement selon la revendication 12, **caractérisé en ce que** l'unité de traitement (102) est agencée de manière à commander le système de positionnement mobile vers la station mobile devant être positionnée sur la base de la connexion radio, et à réduire la taille de la zone de cellule de positionnement lorsque la station mobile devant être positionnée est approchée.

17. Système de positionnement selon la revendication 12, **caractérisé en ce que** l'unité de traitement (102) est agencée de manière à rejeter des mises à jour de localisation en provenance de stations mobiles dont l'identifiant est différent de l'identifiant de la station mobile devant être positionnée.

18. Système de positionnement selon la revendication 12, **caractérisé en ce que** l'unité de traitement (102) est agencée de manière à mesurer la distance de la station mobile sur la base du rapport entre une avance de temporisation (TA), et/ou la puissance de transmission du système de positionnement, et l'intensité du niveau de réception (niveau RX) mesuré par la station mobile.

19. Système de positionnement selon la revendication 12, **caractérisé en ce que** l'unité de traitement (102) est agencée de manière à positionner la station mobile par triangulation.

20. Station de base destinée à être utilisée dans un système de positionnement selon la revendication 12, la station de base (104) comportant :
une unité de traitement (200) destinée à commander les opérations de la station de base ;
au moins un émetteur-récepteur (202) connecté à l'unité de traitement à des fins de communication ; et
au moins une antenne (206) connectée à l'émetteur-récepteur en vue d'envoyer et de recevoir des ondes radio ;
**caractérisée en ce que** la station de base est mobile et **en ce que**
l'émetteur-récepteur (202) de la station de base est commandé par l'unité de positionnement et est agencé de manière à former au moins une zone de cellule de positionnement et à recevoir un identifiant d'une ou plusieurs stations mobiles sur la base de mises à jour de localisation réalisées par des stations mobiles dans chaque zone de localisation de la zone de cellule de positionnement formée, pour permettre à la station mobile d'être positionnée lorsque le système de positionnement reçoit l'identifiant de la station mobile devant être positionnée ;
dans lequel un code de zone de localisation de la cellule de positionnement est différent d'un code de zone de localisation de cellules voisines, et la cellule de positionnement présente un niveau de puissance de transmission supérieur à celui des zones de couverture cellulaire du réseau radio.

21. Station de base selon la revendication 20, **caractérisée en ce que** l'unité de traitement (200) est agencée de manière à maintenir une connexion radio, ou à établir une nouvelle connexion radio à la station mobile devant être positionnée, lorsque l'identifiant de la station mobile devant être positionnée est reçu en vue de permettre le positionnement de la station mobile devant être positionnée sur la base de la connexion radio.
